# EUROPÄISCHE PATENTSCHRIFT

(11) **EP 1 544 955 B1**
(45) Veröffentlichungstag und Bekanntmachung des Hinweises auf die Patenterteilung: **28.03.2007**
(21) Anmeldenummer: 05001650.0
(22) Anmeldetag: 18.01.2003
(51) Int. Cl.: H01R 13/447, H01R 13/52, B60D 1/62, H01R 13/717, H01R 13/66, H01R 13/629, B60D 1/52

(54) **Steckdose für elektrische Steckverbindungen**
Socket for electrical connections
Prise pour connections électriques

(30) Priorität: 20.03.2002 DE 20204423 U
(43) Veröffentlichungstag der Anmeldung: 22.06.2005
(62) Teilanmeldung aus: 03001078.9
(73) Patentinhaber: ERICH JAEGER GmbH + Co. KG, 61169 Friedberg (DE)
(72) Erfinder: Ruebsam, Carsten, 36088 Hünfeld (DE); Wiese, Wolfgang, 61389 Schmitten (DE)
(74) Vertreter: KEIL & SCHAAFHAUSEN Patentanwälte

(56) Entgegenhaltungen:
- EP-A- 0 872 364
- EP-A- 1 160 104
- DE-A1- 10 027 571
- DE-A1- 19 936 709
- DE-C1- 19 525 843
- DE-C1- 19 835 297
- DE-U1- 8 913 061
- US-A- 5 080 594
- PATENT ABSTRACTS OF JAPAN Bd. 1995, Nr. 02, 31. März 1995 (1995-03-31) & JP 06 325834 A (SUMITOMO WIRING SYST LTD), 25. November 1994 (1994-11-25)

## Beschreibung

Die Erfindung bezieht sich auf eine elektrische Steckvorrichtung, z. B. für den Einsatz zwischen Zug- und Anhängerfahrzeug, mit einem gesonderten Schalter und mit einer Steckdose, insbesondere Mehrfunktionssteckdose, mit einem einsteckseitig mit einer mittels eines gegen die Wirkung einer Rückstellfeder öffenbaren Deckels verschließbaren Einstecköffnung für einen Stecker versehenen Dosengehäuse.

Aus der EP 1 006 624 A2 ist eine Steckdose bekannt, bei welcher, um den heutigen Anforderungen an funktionsgerechte vielfältige Signalübertragung von Zugfahrzeug auf Anhängerfahrzeug gerecht zu werden, in dem Dosengehäuse ein Elektronikmodul zur Funktionssignalübertragung zwischen Zug- und Anhängerfahrzeug, wie bspw. für die Überwachung und/oder die Fehlererkennung bzw. die Fehleranzeige der Anhängerfunktion bzw. als Netzknoten für BUS-Systeme, integriert ist.

Aus der DE 89 13 061 U1 ist bspw. eine Steckdose für elektrische Steckvorrichtungen bekannt, welche bspw. für Motorräder dem Anschließen von Handleuchten, Kennleuchten, Rundumlicht, Visieren oder sonstigen elektrischen Einrichtungen dient. Hierbei soll trotz Einhandbedienung das Eindringen von Schmutz oder Feuchtigkeit in das Dosengehäuse dadurch vermieden werden, dass eine den Verschlussdeckel in Öffnungsstellung verriegelnde und mittels eines in den Bewegungsweg des Steckers ragenden Betätigungselement entriegelbare Verriegelungseinrichtung vorgesehen ist. Diese Steckdose dient jedoch nicht der elektrischen Steckverbindung zwischen einem Zug- und einem Anhängerfahrzeug.

Aus der DE 198 35 297 C1 ist eine Kfz-Anbausteckdose mit Beleuchtungsmittel im Deckel bekannt, welche für die notwendige Ausleuchtung des Steckdoseninneren sowie des einzusetzenden Steckers selbst sorgen und damit ein schnelles und sicheres Einführen des Steckers ermöglichen soll. Die Ausleuchtung des Doseninnenraums ist hierbei unbefriedigend, zumal eine Abhängigkeit von der Winkelstellung des Deckels relativ zu dem Dosengehäuse besteht.

Aufgabe der vorliegenden Erfindung ist es, eine Steckvorrichtung der eingangs genannten Gattung mit zusätzlichen Einrichtungen auszustatten, welche die Funktions- und/oder Bedienungssicherheit verbessern.

Diese Aufgabe wird gemäß der Lehre des Anspruchs 1 gelöst. Auf diese Weise ist eine Einhandbedienung möglich.

In einer bevorzugten Ausführung der Erfindung können Mittel zur Abstandskontrolle an dem Deckel (2) und/oder dem Dosengehäuse vorgesehen sein. Gemäß dieses weiteren Erfindungsgedankens ist es möglich, Zugfahrzeuge, welche mit einer erfindungsgemäßen Steckvorrichtung ausgestattet sind, zusätzlich mit einer Abstandskontrolle auszustatten, welche bspw. als Parkhilfe nützlich ist.

Vorzugsweise sind Mittel zum Verrasten des Deckels in Form einer zusammenwirkende Kombination aus Rastvorsprung und Rastrücksprung im rückwärtigen Bereich von Deckel und Dosengehäuse vorgesehen. Unter "rückwärtigen Bereich" wird derjenige Bereich verstanden, in welchem sich die Schwenkachse des Deckels befindet. Die Mittel zum Verrasten des Deckels wirken bei Erreichen seiner Öffnungsstellung. Ferner sind vorzugsweise Mittel zum Entrasten des Deckels bei Erreichen der Einsteckstellung des Steckers vorgesehen.

Die Mittel zum Entrasten des Deckels können dabei einen auf die Mittel zum Verrasten des Deckels einwirkenden, von dem Stecker bei dessen Einstecken betätigbaren Hebelmechanismus aufweisen, so dass eine dauerhaft zuverlässige Funktion gesichert ist.

Mit der bevorzugten Lösung wird auch gewährleistet, dass der Deckel schon beim Einstecken des Steckers wieder freigegeben wird und sich unter der Wirkung der Rückstellfeder gegen die üblicherweise bei derartigen Steckvorrichtungen an dem Stecker vorhandene Auflageplattform anlegen kann, so dass die Innenseite des Deckels während des Fahrbetriebs gegen Verschmutzen geschützt bleibt.

Bei einer erfindungsgemäßen Steckvorrichtung wird die gestellte Aufgabe durch Mittel zum Beleuchten des Doseninnenraumes (Innenraumbeleuchtung) und/oder des Dosenaußenraumes (Außenraumbeleuchtung) gelöst. Auf diese Weise wird gewährleistet, dass bei ungünstigen Lichtverhältnissen oder gar bei Dunkelheit die Steckdose selbst bzw. der Einsteckbereich besser gefunden werden kann.

Die Innenraumbeleuchtung, welche der Findung des Steckkontaktbereiches dient und/oder die Außenraumbeleuchtung (welche der Findung der Steckdose selbst dient) ist erfindungsgemäß mittels eines gesonderten Schalters von Hand oder selbsttätig schaltbar.

Dazu ist der Schalter durch Einstecken des abnehmbaren Kupplungshalses einer Anhängerkupplung in seine Betriebsposition an dem Zugfahrzeug betätigbar. Alternativ kann der Schalter durch Ausklappen oder Ausfahren eines Fahrzeugteils betätigt werden, z. B. eines Bleches, wenn der Kupplungshals einer verstellbaren Anhängerkupplung elektromechanisch oder von Hand in seine Betriebsposition verfahren wird, an welchem bspw. das Dosengehäuse befestigt ist.

Dabei ist von Vorteil, wenn sich die z. B. geschützt im Doseninnenraum vorgesehene Innenraumbeleuchtung jedenfalls auch beim Öffnen des Deckels einschaltet und beim Schließen des Deckels und/oder beim Einstecken des Steckers wieder ausschaltet. Auf diese Weise wird gewährleistet, dass die Energie verbrauchende Beleuchtung im richtigen Moment eingeschaltet wird aber nur so lange eingeschaltet bleibt, wie sie wirklich benötigt wird.

Eine noch bessere Findungsfreundlichkeit der Steckdose bzw. des Einsteckbereiches wird dann gewährleistet, wenn sich die Innenraumbeleuchtung und/oder Außenraumbeleuchtung aufgrund eines Näherungsschalters in dem Deckel und/oder dem Dosengehäuse einschaltet.

Insbesondere in diesen Fällen kann vorgesehen sein, dass sich zur Energieersparnis die Innenraumbeleuchtung und/oder Außenraumbeleuchtung aufgrund eines Zeitgliedes in vorgegebenem, ggf. einstellbarem zeitlichen Abstand von ihrem Einschalten wieder ausschaltet. Das Zeitglied kann so einstellbar sein, dass die üblicherweise benötigte Zeit für das Einstecken eines Steckers in die Steckdose berücksichtigt ist.

Die Innenraumbeleuchtung und/oder die Außenraumbeleuchtung können bspw. ein LED- oder dgl. energiesparendes Leuchtmittel aufweisen.

Um eine hinreichende Ausleuchtung zu erhalten, wird in Weiterbildung dieses Erfindungsgedankens vorgesehen, dass das Leuchtmittel mit einem Lichtleiter zur Verbreitung des Lichtes in dem Doseninnenraum und/oder zur Leitung des Lichtes aus dem Doseninnenraum in den Dosenaußenraum zusammenwirkt. Aufgrund der gleichmäßigen Ausleuchtung des Doseninnenraumes können dann die Stromkontakte besser gefunden werden.

Als Lichtleiter kann bspw. der Dichtungsring dienen, welcher ohnehin zur Abdichtung des Steckers gegen den in dem Dosengehäuse vorgesehenen Kontaktträgereinsatz oder das Dosengehäuse selbst vorgesehen ist. In diesem Fall besteht der Dichtring aus einem lichtdurchlässigen Gummi- oder Kunststoffmaterial, wie einem Polymethylmetacrylat.

Zum einfachen Auffinden des Steckkontaktbereiches und/oder der Steckdose selbst können der Deckel und/oder das Dosengehäuse ganz oder teilweise aus transparentem und/oder fluoreszierendem Material bestehen.

Wenn eine Steckvorrichtung der eingangs genannten Art bei einem Zugfahrzeug mit Anhängerkupplung vorgesehen ist, kann das Dosengehäuse erfindungsgemäß nach einem weiteren Erfindungsvorschlag in dem Kupplungshals einer elektromechanisch oder von Hand betätigbaren Anhängerkupplung integriert sein. Wenn die Steckdose nicht bereits selbst eine Beleuchtungseinrichtung der oben erfindungsgemäß vorgeschlagenen Art aufweist, ist es hierbei von Vorteil, wenn an dem Kupplungshals eine z. B. von der Steckdose aus mit Strom versorgte Warn- und/oder Beleuchtungseinrichtung vorgesehen ist. Die Warneinrichtung kann auch akustischer Art sein. Auf diese Weise kann (auch) der Kupplungshals bei Dunkelheit besser gefunden werden. Die Warneinrichtung ist insbesondere bei Betätigung der Anhängerkupplung aktiv, so dass Gefahrenzustände ausgeschlossen werden.

In Weiterbildung dieses Erfindungsgedankens ist die Steuerung des aus einer Ruheposition in eine Betriebsposition und umgekehrt verfahrbaren Kupplungshalses der Anhängerkupplung abhängig oder unabhängig von dem Leuchtmittel und/oder abhängig oder unabhängig von der Warn- und/oder Beleuchtungseinrichtung und/oder abhängig oder unabhängig von einer Beleuchtung des Anhängerfahrzeuges und/oder abhängig oder unabhängig von einem Rückfahrscheinwerfer des Zugfahrzeuges.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1A: in schematischer Seitenansicht einer zur Erfindung gehörenden Steckdose mit in Öffnungsstellung verrastbaren und beim vollständigen Einstecken des Steckers wieder entrastbaren Deckel,
- Fig. 1B: einen Teilschnitt der Steckdose gemäß Fig. 1A im Bereich der Anlenkung des Deckels an dem Dosengehäuse,
- Fig. 2A: eine zur Erfindung gehörende Steckdose (mit geöffnetem Deckel und eingestecktem Stecker), welche mit einer Innenraumbeleuchtung ausgestattet ist,
- Fig. 2B: einen teilweise weggebrochenen Vertikalschnitt der Steckdose gemäß Fig. 2a bei geschlossenem Deckel,
- Fig. 3: in schematischer Seitenansicht eine Steckdose, die zur Erfindung gehört, mit Innenraumbeleuchtung und Außenraumbeleuchtung,
- Fig. 4A und 4B: in Seitenansicht und in Draufsicht eine zur Erfindung gehörende Steckdose mit Abstandskontrolleinrichtung, und
- Fig. 5: in Seitenansicht schematisch den Kupplungshals einer Anhängervorrichtung, in welche eine zur Erfindung gehörenden Steckdose integriert und welcher eine Warn- und Beleuchtungseinrichtung zugeordnet ist.

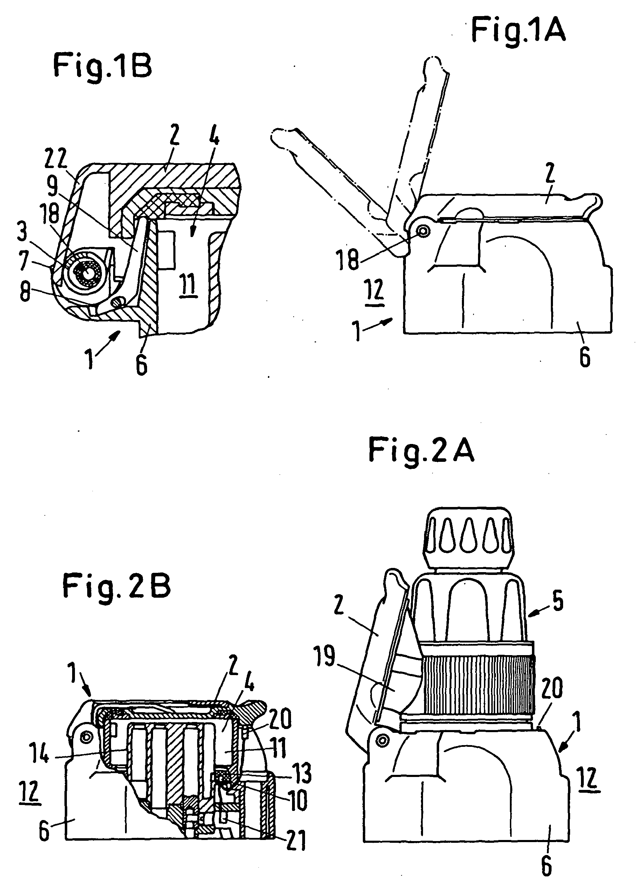

Die Steckdose 1 gemäß Fig. 1A weist, wie auch die übrigen weiter unten erörterten Steckdosen, ein Dosengehäuse 6 mit einer oberen Einstecköffnung 4 auf, welche mit einem Deckel 2 verschließbar ist. Zu diesem Zweck ist der Deckel 2 um eine horizontale Achse 18 im hinteren Bereich des Dosengehäuses 6 schwenkbar gelagert und kann aus der mit ausgezogenen Linien dargestellte Schließstellung gegen die Wirkung einer Rückstellfeder 3 in eine Öffnungsstellung geschwenkt werden, wie dies mit strickpunktierten Linien angedeutet ist. Dabei kann der Deckel 2 eine Zwischenstellung einnehmen, in welcher er, wie bspw. aus Fig. 2A ersichtlich, gegen eine Auflageplattform 19 des in die Steckdose 1 eingesteckten Steckers 5 anliegen kann, um die Innenseite des Deckels 2 im Fahrbetrieb gegen Verschmutzung zu schützen.

Aus Fig. 1B ist ersichtlich, dass der Deckel 2 an der Außenseite einer hinteren Lasche einen Rastvorsprung 7 aufweist, welcher beim Überführen des Deckels 2 in die äußerste Öffnungsstellung unter elastischem Ausweichen der Lasche 22 in einen Rastrücksprung 8 an dem Dosengehäuse 6 einrastet. Auf der Innenseite der Schwenkachse 18 ist ein einen Kipphebel 9 aufweisender Hebelmechanismus vorgesehen, welcher in seiner einen Schwenkstellung etwas über die Oberkante des Dosengehäuses 6 hinausragt. Auf diesen vorspringenden Teil des Winkelhebels 9 wirkt der Stecker 5 ein, wenn er vollständig in die Steckdose 1 eingesteckt wird. Hierdurch wird die Verrastung des Deckels 2 gelöst. Der Deckel 2 kann dann unter der Wirkung der Rückstellfeder 3 in die bspw. in Fig. 2A gezeigte Lage zurückschwenken, in welcher der Deckel 2 an der Auflageplattform 19 des Steckers 5 zu liegen kommt. Auf diese Weise ist eine sichere Einhandbedienung möglich.

Die Steckdose 1 gemäß den Fig. 2A und 2B ist mit einem Leuchtmittel 10, z. B. einem LED-Leuchtmittel 10, im Doseninnenraum 11 ausgestattet. Das Leuchtmittel 10 wird von einem nach unten weisenden Stecker 21 mit Strom versorgt und ist mit einem Schalter 20 versehen, welcher, wie insbesondere aus Fig. 2A ersichtlich, aus dem oberen Rand des Dosengehäuses 6 hinausragt, an welchem der Deckel 2 in seiner Schließstellung anliegt. Die Schaltung ist dabei so getroffen, dass bei geschlossenem Deckel 2 die Leuchtmittel 10 abgeschaltet ist und mit dem Öffnen des Deckels 2 eingeschaltet wird. Auf diese Weise wird beim Öffnen des Deckels 2 der Doseninnenraum 11 beleuchtet, so dass die Kontakte, in welche der Stecker 5 eingeführt werden muss, auch bei Dunkelheit gut sichtbar sind. Zur besseren Ausleuchtung des Doseninnenraums 11 kann das Leuchtmittel 10 mit dem Dichtungsring zusammenarbeiten, an welchen sich der Stecker 5 beim Einstecken in die Steckdose 1 stirnseitig anlegt. In diesem Fall ist die Dichtung aus transparentem Material hergestellt, so dass sie als Lichtleiter 13 wirkt, wodurch der Doseninnenraum 11 noch besser ausgeleuchtet wird und die Dichtung, welche die Kontakte des Kontaktträgereinsatzes 14 umgibt, eine noch bessere Orientierung für das Einstecken des Steckers 5 bietet.

Bei der Ausführungsform mit Leuchtmittel 10 im Doseninnenraum 11 können auch der Deckel 2 und/oder das Dosengehäuse 6 wenigstens bereichsweise aus transparentem und/oder fluoreszierendem Material bestehen, so dass auch Licht in den Dosenaußenraum 12 fällt. In diesem Fall kann es zweckmäßig sein, das Leuchtmittel 10 schon vor dem Öffnen des Deckels 2 anzuschalten, wofür bspw. ein gesonderter Schalter oder ein Näherungsschalter in dem Deckel 2 oder an dem Dosengehäuse 6 vorgesehen sein kann. Wenn der transparente und/oder fluoreszierende Bereich des Deckels 2 oder Dosengehäuses 6 ringförmig ausgebildet ist, kann die Lage der Steckdose 1 bei Dunkelheit von allen Seiten gut erkannt werden.

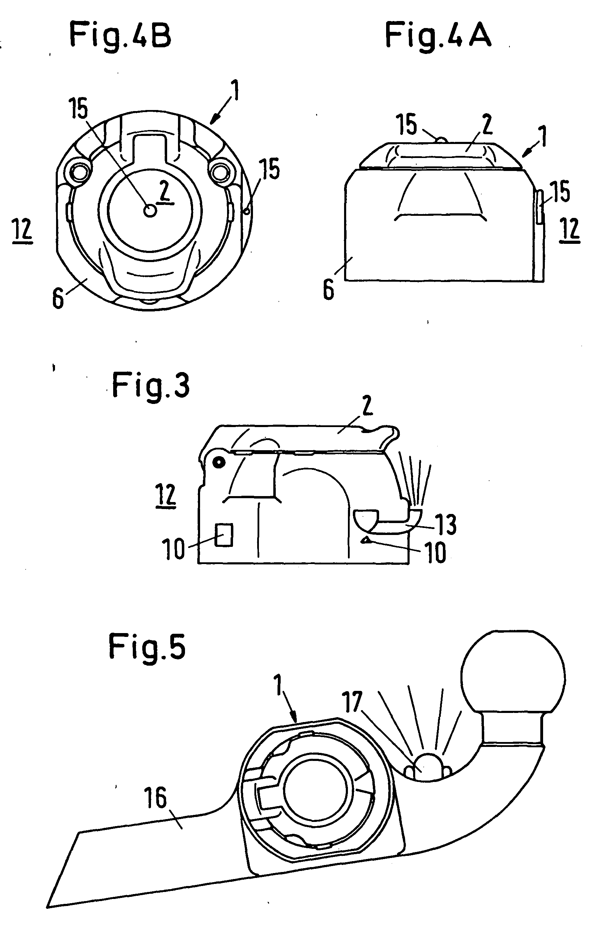

Am Beispiel der Fig. 3 wird veranschaulicht, dass von dem in dem Doseninnenraum 11 geschützt vorgesehenen Leuchtmittel 10 über einen Lichtleiter 13 auch Licht gezielt in den Dosenaußenraum 12 geführt werden kann.

Die Steckdose 1 nach den Fig. 4A und 4B ist wahlweise mit wenigstens einen Abstandssensor 15 aufweisenden Mitteln zur Abstandskontrolle im Deckel 2 und/oder an einem Seitenansatz des Dosengehäuses 6 ausgestattet. Auf diese Weise kann ein Zugfahrzeug, welches z. B. nachträglich mit einer solchen Steckdose 1 ausgestattet wird, gleichzeitig eine Einrichtung zur Abstandskontrolle erhalten, was insbesondere beim Einparken hilfreich ist.

Gemäß Fig. 5 ist eine Steckdose 1 in den Kupplungshals 16 einer Anhängerkupplung integriert. Gleichzeitig ist an dem Kupplungshals 16 eine Warn- und/oder Beleuchtungseinrichtung 17 vorgesehen, welche bei ungünstigen Lichtverhältnissen sowohl den Kupplungshals 16 als auch die Steckdose 1 sichtbar machen kann, wenn letztere nicht selbst mit einer Beleuchtungseinrichtung ausgestattet ist. Die Warn- und/oder Beleuchtungseinrichtung 17 kann über die Steckdose 1 mit Strom versorgt werden, wenn der Kupplungshals 16 in seine Betriebsposition überführt wird.

### Bezugszeichenliste:

- 1: Steckdose
- 2: Deckel
- 3: Rückstellfeder
- 4: Einstecköffnung
- 5: Stecker
- 6: Dosengehäuse
- 7: Rastvorsprung
- 8: Rastrücksprung
- 9: Hebelmechanismus
- 10: Leuchtmittel
- 11: Doseninnenraum
- 12: Dosenaußenraum
- 13: Lichtleiter, transparenter Gummiring
- 14: Kontaktträgereinsatz
- 15: Abstandssensor
- 16: Kupplungshals
- 17: Warn- und/oder Beleuchtungseinrichtung
- 18: Schwenkachse
- 19: Auflageplattform
- 20: Schalter
- 21: Stecker
- 22: Lasche

## Patentansprüche

1. Elektrische Steckvorrichtung, für den Einsatz zwischen Zug- und Anhängerfahrzeug, mit einem gesonderten Schalter und mit einer Steckdose, insbesondere Mehrfunktionssteckdose, mit einem einsteckseitig mit einer mittels eines gegen die Wirkung einer Rückstellfeder (3) öffenbaren Deckels (2) verschließbaren Einstecköffnung (4) für einen Stecker (5) versehenen Dosengehäuse (6), **dadurch gekennzeichnet, dass** die Steckdose Mittel (10) zum Beleuchten des Doseninnenraums (11) als Innenraumbeleuchtung und/oder des Dosenaußenraums (12) als Außenraumbeleuchtung umfasst, dass die Innenraumbeleuchtung und/oder die Außenraumbeleuchtung mittels des gesonderten Schalters schaltbar ist und dass der gesonderte Schalter durch Einstecken eines abnehmbaren Kupplungshalses (16) oder durch Verstellen des Kupplungshalses einer Anhängerkupplung in seine Betriebsposition an dem Zugfahrzeug betätigbar ist.

2. Steckvorrichtung nach Anspruch 1, **gekennzeichnet durch** Mittel zur Abstandskontrolle an dem Deckel (2) und/oder dem Dosengehäuse (6).

3. Steckvorrichtung nach Anspruch 2, **gekennzeichnet durch** Mittel (7, 8) zum Verrasten des Deckels (2) in seiner Öffnungsstellung und Mittel zum Entrasten des Deckels (2) bei Erreichen der Einsteckstellung des Steckers (5).

4. Steckvorrichtung nach Anspruch 3, **dadurch gekennzeichnet, dass** die Mittel (7, 8) zum Verrasten des Deckels (2) eine zusammenwirkende Kombination aus Rastvorsprung (7) und Rastrücksprung (8) im rückwärtigen Bereich von Deckel (2) und Dosengehäuse (6) aufweisen.

5. Steckvorrichtung nach einem der Ansprüche 3 oder 4, **dadurch gekennzeichnet, dass** die Mittel (9) zum Entrasten des Deckels (2) einen auf die Mittel (7, 8) zum Verrasten des Deckels (2) einwirkenden, von dem Stecker (5) bei dessen Einstecken betätigbaren Hebelmechanismus (9) aufweist.

6. Steckvorrichtung nach einem der vorhergehenden Ansprüche, **dadurch gekennzeichnet, dass** sich die vorzugsweise in dem Doseninnenraum (11) und/oder an dem Deckel (2) bzw. dem Dosengehäuse (6) vorgesehenen Innenraumbeleuchtung beim Öffnen des Deckels (2) einschaltet und beim Schließen des Deckels (2) und/oder beim Einstecken des Steckers (5) wieder ausschaltet.

7. Steckvorrichtung nach einem der vorhergehenden Ansprüche, **dadurch gekennzeichnet, dass** sich die Innenraumbeleuchtung und/oder die Außenraumbeleuchtung aufgrund eines Näherungsschalters in dem Deckel (2) und/oder an dem Dosengehäuse (6) einschaltet.

8. Steckvorrichtung nach einem der vorhergehenden Ansprüche, **dadurch gekennzeichnet, dass** sich die Innenraumbeleuchtung und/oder Außenraumbeleuchtung aufgrund eines Zeitgliedes in vorgegebenem, ggf. einstellbarem zeitlichen Abstand von ihrem Einschalten wieder ausschaltet.

9. Steckvorrichtung nach einem der vorhergehenden Ansprüche, **dadurch gekennzeichnet, dass** die Innenraumbeleuchtung und/oder die Außenraumbeleuchtung ein LED- oder dgl. energiesparendes Leuchtmittel (10) aufweist.

10. Steckvorrichtung nach Anspruch 9, **dadurch gekennzeichnet, dass** das Leuchtmittel (10) mit einem Lichtleiter (13) zur Verbreitung des Lichtes in dem Doseninnenraum (11) und/oder zur Leitung des Lichtes von dem Doseninnenraum (11) in den Dosenaußenraum (12) zusammenwirkt.

11. Steckvorrichtung nach Anspruch 10, **dadurch gekennzeichnet, dass** der Lichtleiter (13) von einem Dichtring gebildet ist, welcher der Abdichtung des Steckers (5) gegen den Kontaktträgereinsatz (14) in dem Dosengehäuse (6) und/oder gegen das Dosengehäuse (6) selbst dient.

12. Steckvorrichtung nach einem der vorhergehenden Ansprüche, **dadurch gekennzeichnet, dass** der Deckel (2) und/oder das Dosengehäuse (6) ganz oder teilweise aus transparentem und/oder fluoreszierendem Material gefertigt sind/ist.

13. Steckvorrichtung nach Anspruch 12, **dadurch gekennzeichnet, dass** der Deckel (2) und/oder das Dosengehäuse (6) mit einem Umfangsring aus transparentem und/oder fluoreszierenden Material ausgestattet sind/ist.

14. Steckvorrichtung nach einem der vorhergehenden Ansprüche, **dadurch gekennzeichnet, dass** das Dosengehäuse (6) in dem Kupplungshals (16) einer elektromechanisch und/oder von Hand betätigbaren Anhängerkupplung integriert ist.

15. Steckvorrichtung nach Anspruch 14, **gekennzeichnet durch** eine ihr an dem Kupplungshals (16) zugeordnete und von ihr aus mit Strom versorgbare Warn- und/oder Beleuchtungseinrichtung (17).

## Claims

1. Socket for electrical connections, for use between a tractor and a trailer, with a separate switch and with a socket, especially a multi-function socket with a socket housing (6) on the socket side fitted with a cover (2), which can be opened against the effect of a return spring (3) closing a socket opening (4) for a plug (5), **characterised in that** the socket includes means (10) to light the interior of the socket (11) as interior lighting and/or the exterior of the socket (12) as exterior lighting, that the interior lighting and/or the exterior lighting are switched on and off by means of the separate switch and that the separate switch is operated by plugging in a removable coupling neck (16) or by moving the coupling neck of a trailer coupling into its operating position on the tractor.

2. Socket in accordance with claim 1, **characterised by** means to check the distance to the cover (2) and/or the socket housing (6).

3. Socket in accordance with claim 2, **characterised by** means (7, 8) to fix the cover (2) in its opening position and means to release the cover (2) when the plug (5) is plugged in.

4. Socket in accordance with claim 3, **characterised in that** the means (7, 8) for fixing the cover (2) have a co-operating combination of front projection (7) and rear projection (8) in the rear area of the cover (2) and the socket housing (6).

5. Socket in accordance with either one of claims 3 or 4, **characterised in that** the means (9) for releasing the cover (2) has a lever mechanism (9), which is operated by the plug (5) when this is plugged in, acting on the means (7, 8) for fixing the cover (2).

6. Socket in accordance with any one of the preceding claims, **characterised in that** the interior lighting provided preferably in the inside of the socket (11) and/or on the cover (2) or the socket housing (6) switches on when the cover (2) is opened and switches off again when the cover (2) is closed and/or when the plug (5) is plugged in.

7. Socket in accordance with any one of the preceding claims, **characterised in that** the interior lighting and/or the exterior lighting is switched on by a proximity switch in the cover (2) and/or on the socket housing (6).

8. Socket in accordance with any one of the preceding claims, **characterised in that** the interior lighting and/or the exterior lighting is switched off again by a timer, after a prescribed period, variable as necessary, from its switching on.

9. Socket in accordance with any one of the preceding claims, **characterised in that** the interior lighting and/or the exterior lighting has a LED or similar energy saving means of lighting (10).

10. Socket in accordance with claim 9, **characterised in that** the means of lighting (10) co-operates with a light conductor (13) for the distribution of the light in the interior of the socket (11) and/or to conduct the light from the interior of the socket (11) into the exterior of the socket (12).

11. Socket in accordance with claim 10, **characterised in that** the light conductor (13) is formed by a sealing ring, which itself provides the sealing of the plug (5) against the contact bearer insert (14) in the socket housing (6) and/or against socket housing (6).

12. Socket in accordance with any one of the preceding claims, **characterised in that** the cover (2) and/or the socket housing (6) is produced entirely or partially from transparent and/or fluorescent material.

13. Socket in accordance with claim 12, **characterised in that** the cover (2) and/or the socket housing (6) are/is fitted with a circumferential ring made from transparent and/or fluorescent material.

14. Socket in accordance with any one of the preceding claims, **characterised in that** the socket housing (6) is integrated into the coupling neck (16) of a trailer coupling operated electromechanically and/or by hand.

15. Socket in accordance with claim 14, **characterised by** a warning and/or lighting device (17) fitted to the socket on the coupling neck (16) and supplied with power by the socket.

## Revendications

1. Dispositif électrique enfichable pour l'utilisation entre un véhicule tracteur et un véhicule tracté, avec un interrupteur séparé et avec une prise de courant, notamment une prise de courant multifonction, avec un boîtier de prise (6) muni du côté de l'enfichage d'une ouverture d'introduction (4) pour une fiche mâle (5), ladite ouverture d'introduction pouvant être fermée par un couvercle (2) pouvant être ouvert contre l'effet d'un ressort de rappel (3), **caractérisé en ce que** la prise comprend des moyens (10) pour l'éclairage de l'espace intérieur (11) de la prise en tant qu'éclairage de l'espace intérieur et/ou de l'espace extérieur (12) de la prise en tant qu'éclairage de l'espace extérieur, **en ce que** l'éclairage de l'espace intérieur et/ou l'éclairage de l'espace extérieur peut être commuté au moyen de l'interrupteur séparé, et **en ce que** l'interrupteur séparé peut être actionné en enfichant un col de remorquage (16) amovible ou en positionnant le col de remorquage d'un attelage de remorque dans sa position d'utilisation sur le véhicule tracteur.

2. Dispositif enfichable selon la revendication 1, **caractérisé par** des moyens pour le contrôle de la distance situés sur le couvercle (2) et/ou sur le boîtier de prise (6).

3. Dispositif enfichable selon la revendication 2, **caractérisé par** des moyens (7, 8) pour enclencher le couvercle (2) dans sa position d'ouverture et des moyens pour desenclencher le couvercle (2) lorsque la fiche (5) atteint la position d'enfichage.

4. Dispositif enfichable selon la revendication 3, **caractérisé en ce que** les moyens (7, 8) pour enclencher le couvercle (2) présentent une combinaison de saillie d'arrêt (7) et d'épaulement d'arrêt (8) coopérant ensemble dans la région arrière du couvercle (2) et du boîtier de prise (6).

5. Dispositif enfichable selon l'une des revendications 3 ou 4, **caractérisé en ce que** les moyens (9) pour désenclencher le couvercle (2) présentent un mécanisme de levier (9) actionnable par la fiche (5) lors de son enfichage et agissant sur les moyens (7, 8) pour enclencher le couvercle (2).

6. Dispositif enfichable selon l'une des revendications précédentes, **caractérisé en ce que** l'éclairage de l'espace intérieur prévu de préférence dans l'espace intérieur (11) de la prise et/ou sur le couvercle (2) ou bien sur le boîtier de la prise (6) s'allume au moment de l'ouverture du couvercle (2) et s'éteint au moment de la fermeture du couvercle (2) et/ou au moment de l'enfichage de la fiche (5).

7. Dispositif enfichable selon l'une des revendications précédentes, **caractérisé en ce que** l'éclairage de l'espace intérieur et/ou l'éclairage de l'espace extérieur se commute en raison d'un commutateur de proximité dans le couvercle (2) et/ou sur le boîtier de prise (6).

8. Dispositif enfichable selon l'une des revendications précédentes, **caractérisé en ce que** l'éclairage de l'espace intérieur et/ou l'éclairage de l'espace extérieur s'éteint à nouveau après un laps de temps prédéterminé suivant son allumage, éventuellement réglable, en raison d'un système temporisé.

9. Dispositif enfichable selon l'une des revendications précédentes, **caractérisé en ce que** l'éclairage de l'espace intérieur et/ou l'éclairage de l'espace extérieur présente des moyens d'éclairage (10) par LED ou d'autres moyens économiques du point de vue énergétique.

10. Dispositif enfichable selon la revendication 9, **caractérisé en ce que** les moyens d'éclairage (10) coopèrent avec un guide de lumière (13) pour la propagation de la lumière dans l'espace intérieur (11) de la prise et/ou pour guider la lumière de l'espace intérieur (11) de la prise vers l'espace extérieur (12) de la prise.

11. Dispositif enfichable selon la revendication 10, **caractérisé en ce que** le guide de lumière (13) est formé par une rondelle d'étanchéité servant à rendre étanche la fiche (5) par rapport à l'insert porteur de contact (14) dans le boîtier de prise (6) et/ou par rapport au boîtier de prise (6) lui-même.

12. Dispositif enfichable selon l'une des revendications précédentes, **caractérisé en ce que** le couvercle (2) et/ou le boîtier de prise (6) sont/est entièrement ou partiellement réalisé(s) dans un matériau transparent et/ou fluorescent.

13. Dispositif enfichable selon la revendication 12, **caractérisé en ce que** le couvercle (2) et/ou le boîtier de prise (6) sont/est muni(s) d'un anneau circonférentiel réalisé dans un matériau transparent et/ou fluorescent.

14. Dispositif enfichable selon l'une des revendications précédentes, **caractérisé en ce que** le boîtier de prise (6) est intégré dans le col de remorquage (16) d'un attelage de remorque pouvant être actionné de façon électromécanique et/ou manuellement.

15. Dispositif enfichable selon la revendication 14, **caractérisé par** un dispositif d'alarme et/ou d'éclairage lui étant associé sur le col de remorquage (16) et pouvant être alimenté en courant à partir dudit dispositif.
